# EUROPÄISCHE PATENTSCHRIFT

(11) **EP 2 095 520 B1**
(45) Veröffentlichungstag und Bekanntmachung des Hinweises auf die Patenterteilung: **29.09.2010**
(21) Anmeldenummer: 07817790.4
(22) Anmeldetag: 13.11.2007
(51) Int. Cl.: H04B 1/38, H04M 1/60, B60R 11/02

(54) **HALTEVORRICHTUNG FÜR EIN ELEKTRONISCHES GERÄT**
HOLDING APPARATUS FOR AN ELECTRONIC APPLIANCE
DISPOSITIF DE MAINTIEN POUR UN APPAREIL ÉLECTRONIQUE

(30) Priorität: 13.11.2006 DE 102006053650
(43) Veröffentlichungstag der Anmeldung: 02.09.2009
(73) Patentinhaber: Peiker acustic GmbH & Co. KG, 61381 Friedrichsdorf (DE)
(72) Erfinder: PEIKER, Andreas, 61381 Friedrichsdorf (DE)
(74) Vertreter: Otten, Herbert
(86) Internationale Anmeldenummer: PCT/DE2007/002052
(87) Internationale Veröffentlichungsnummer: WO 2008/058523

(56) Entgegenhaltungen:
- EP-A- 1 093 972
- DE-A1- 19 652 826
- DE-A1- 19 946 746
- DE-B3-102005 025 530
- GB-A- 2 310 564
- US-A- 6 019 624

## Beschreibung

Die Erfindung betrifft eine Haltevorrichtung für ein elektronisches Gerät gemäß dem Oberbegriff des Anspruchs 1.

Aus der DE 196 52 826 A1 ist eine Haltevorrichtung für ein elektronisches Gerät bekannt, wobei die Haltevorrichtung einen feststehenden Grundkörper und einen Träger umfasst, wobei der Träger relativ zu dem Grundkörper bewegbar ist, wobei der Träger einen Aufnahmebereich für das elektronische Gerät aufweist, wobei der Träger aus einer Haltestellung B für das elektronische Gerät in eine Freigabestellung A für das elektronische Geräte bewegbar ist und umgekehrt und wobei der Träger wenigstens eine Schnittstelle umfasst, welche zu einer Schnittstelle des elektronischen Geräts kompatibel ist. Derartige Haltevorrichtungen bedürfen beim Aufstecken bzw. Kontaktieren und beim Abziehen bzw. Dekontaktieren des elektronischen Geräts einer besonderen Sorgfalt, um keine Beschädigungen der Schnittstellen zu verursachen. Somit sind derartige Haltevorrichtungen leicht beschädigbar und erfordern einen vergleichsweise hohen Zeitaufwand bei der Handhabung des elektronischen Geräts.

Der Erfindung liegt die Aufgabe zugrunde, eine Haltevorrichtung für ein elektronisches Gerät zu entwickeln, welche das Kontaktieren und Dekontaktieren von elektronischen Geräten erleichtert.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Bei der erfindungsgemäßen Haltevorrichtung steht die Schnittstelle in der Freigabestellung A des Trägers in einer aus dem Aufnahmebereich zurückgezogenen ersten Stellung und in der Haltestellung B des Trägers in einer in den Aufnahmebereich ausgefahrenen zweiten Stellung, wobei die Schnittstelle bei einer Bewegung des Trägers aus der Haltestellung B in die Freigabestellung A aus ihrer zweiten Stellung in ihre erste Stellungen verfahrbar ist und wobei die Schnittstelle bei einer Bewegung des Trägers aus der Freigabestellung A in die Haltestellung B aus ihrer ersten Stellung in ihre zweite Stellungen verfahrbar ist. Hierdurch ist eine automatisierte Kontaktierung und Dekontaktierung des elektronischen Geräts möglich, welche von der Stellung des Trägers abhängig ist. Somit entfallen für einen Nutzer der Haltervorrichtung die Vorgänge des Kontaktierens und des Dekontaktierens. Kern der Erfindung ist somit eine Haltevorrichtung für ein elektronisches Gerät, bei welcher der Nutzer das elektronische Gerät in die Haltevorrichtung nur einlegen oder entnehmen muss und eine mechanische Herstellung bzw. Trennung einer elektrischen Verbindung zwischen dem elektronischen Gerät und der Haltevorrichtung während und durch eine Relativbewegung des Trägers der Haltevorrichtung gegenüber dem Grundkörper der Haltevorrichtung erfolgt.

Im Sinne der Erfindung ist unter einer Schnittstelle der Haltevorrichtung jede Kontaktanordnung zu verstehen, welche geeignet ist mit einer als elektrische Schnittstelle ausgebildeten Kontaktanordnung eines elektronischen Geräts durch eine Verfahrbewegung zusammenzuwirken.

Weitere Einzelheiten der Erfindung werden in der Zeichnung anhand von schematisch und teilweise vereinfacht dargestellten Ausführungsbeispielen beschrieben.

Hierbei zeigt:
- Figuren 1a, 1b:: eine perspektivische Darstellung einer ersten erfindungsgemäßen Haltevorrichtung in einer Freigabestellung A und eine Detailansicht dieser Haltervorrichtung;
- Figur 2a, 2b:: eine perspektivische Darstellung der in der Figur 1a gezeigten Haltevorrichtung in einer Haltestellung B und eine Detailansicht dieser Haltevorrichtung;
- Figur 3:: eine schematische Ansicht einer zweiten erfindungsgemäßen Haltevorrichtung, welche in einer Freigabestellung A steht;
- Figur 4:: eine schematische Ansicht der in der Figur 3 gezeigten Haltevorrichtung in einer Haltestellung A;
- Figur 5:: eine schematische Schnittansicht der in der Figur 3 gezeigten Haltevorrichtung und
- Figur 6 und 7:: eine Ausführungsvariante eines Trägers in Freigabestellung und Haltestellung.

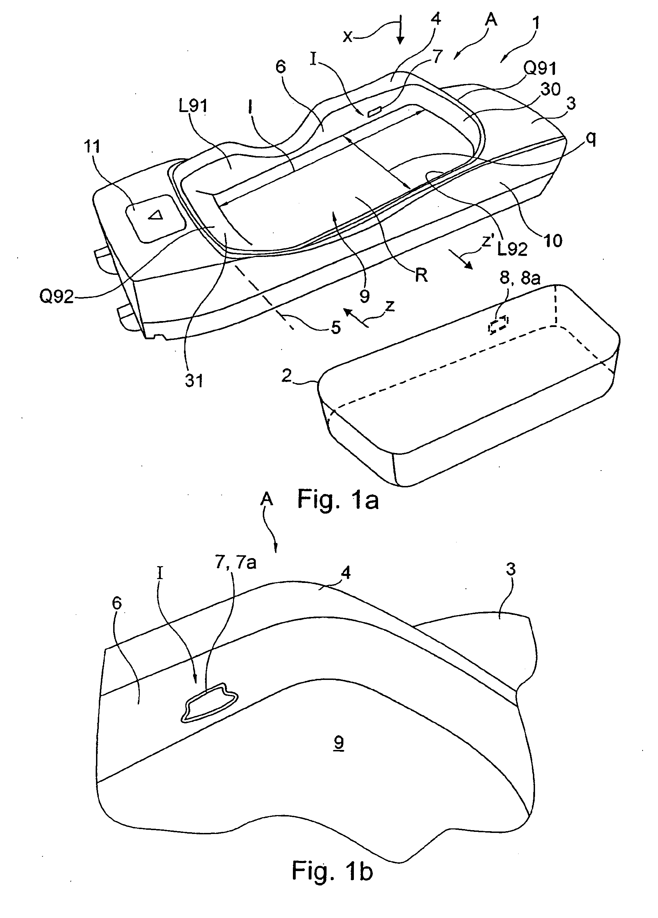

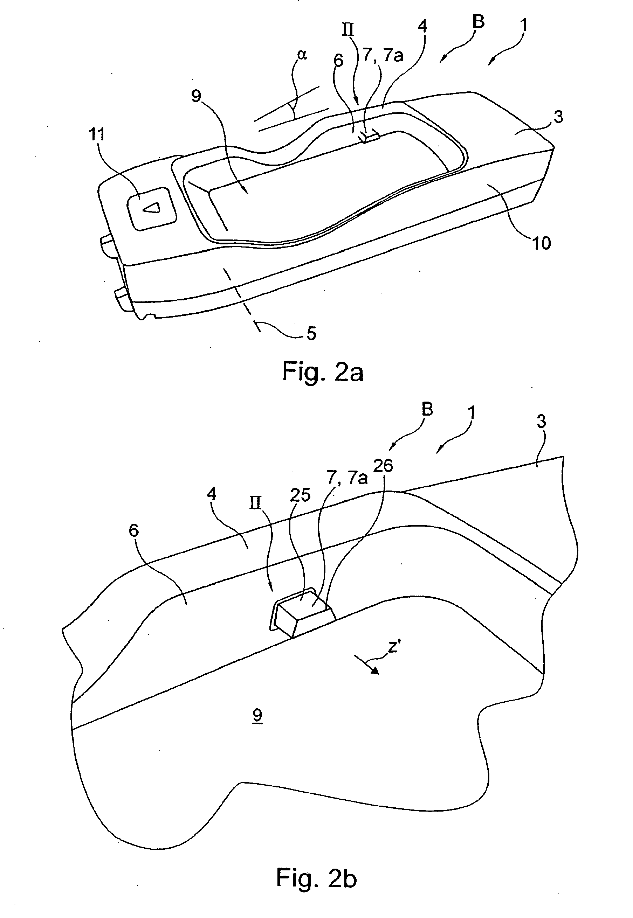

In den Figuren 1a, 1b, 2a und 2b ist eine Haltevorrichtung 1 in unterschiedlichen Stellungen gezeigt. Die Figur 1a zeigt weiterhin ein elektronisches Gerät 2 in schematischer Darstellung. Die Haltevorrichtung 1 umfasst einen Grundkörper 3 und einen Träger 4, wobei der Träger 4 relativ zu dem Grundkörper 3 um eine Schwenkachse 5 mit einer Schwenkbewegung schwenkbar ist. Die Schwenkachse 5 ermöglicht es dem Träger 4 eine in den Figuren 1a und 1b gezeigte Freigabestellung A einzunehmen und eine in den Figuren 2a und 2b dargestellte Haltestellung B einzunehmen. Ein zwischen der Freigabestellung A des Trägers 4 und der Haltestellung B des Trägers 4 liegender Schwenkwinkel α liegt in einem Bereich von etwa 5° bis 90° und insbesondere bei α = 10°. Der Träger 4 weist eine Längswand 6 auf, an welcher eine Schnittstelle 7 für eine Kontaktierungdes elektronischen Geräts 2 geführt ist. Die Schnittstelle 7 der Haltevorrichtung 1 ist als mehrpoliger Stecker 7a ausgeführt. Das elektronische Gerät 2 ist entsprechend mit einer als mehrpolige Buchse 8a ausgeführten Schnittstelle 8 ausgeführt, welche zu dem mehrpoligen Stecker 7a kompatibel ist. Zur späteren Kontaktierung und Fixierung wird das elektronische Gerät 2 zunächst in einen durch den Träger 4 gebildeten Aufnahmebereich 9 eingelegt. Durch ein Niederdrücken bzw. Schwenken des elektronischen Geräts 2 und/oder des Trägers 4 in eine Richtung x wird der Träger 4 zusammen mit dem elektronischen Gerät dann in die in den Figuren 2a und 2b gezeigte Haltestellung B gebracht.

Der durch den Träger 4 gebildete Aufnahmebereich 9 weist zwei Längsseiten L91 und L92 und zwei Querseiten Q91 und Q92 auf. An der Längsseite L91 des Aufnahmebereichs 9 befindet sich die Längswand 6 zusammen mit der Schnittstelle 7 der Haltevorrichtung 1. Zu der gegenüberliegenden Längsseite L92 ist der Aufnahmebereich 9 seitlich offen und zu den Querseiten Q91 und Q92 weist der Aufnahmebereich 9 Querwände 30 und 31 auf. Die Schwenkachse 5 verläuft etwa senkrecht zu der Längswand 6 und etwa parallel zu den Querwänden 30, 31. Die Längsseiten L91 bzw. L92 weisen eine Länge 1 auf. Die Querseiten Q91 bzw. Q92 weisen eine Länge q. Für die Längen 1 und q gilt 1 > q. Somit weist der Aufnahmebereich 9 des Trägers 4 in der Draufsicht etwa die Form eines Rechtecks R auf.

Das elektronische Gerät 2 kann von oben aus der Pfeilrichtung x oder seitlich aus der Pfeilrichtung z oder aus jeder weiteren zwischen diesen Richtungen liegenden Richtung in den Aufnahmebereich 9 eingelegt werden. Durch die Längswand 6, die Querwände 31 und 32 und eine Seitenwand 10 des Grundkörpers erfolgt eine Positionierung des elektronischen Geräts 2, wobei die Schnittstelle 8 des elektronischen Geräts 2 genau auf den Stecker 7a der Haltevorrichtung 1 ausgerichtet wird. Beim Niederdrücken des Trägers 4 aus der in der Figur 1a gezeigten Stellung A in die in der Figur 2a gezeigte Stellung B bewegt sich dann der Stecker 7a aus einer ersten Stellung I in eine Pfeilrichtung z' in den Aufnahmebereich 9 bzw. in die Buchse 8a des in dem Aufnahmebereich 9 liegenden elektronischen Geräts 2 (siehe Figur 2a und 2b). Die Figur 2a zeigt den Stecker 7a in einer vollständig ausgefahrenen zweiten Stellung II. In der ersten Stellung I steht der Stecker 7a nicht über die Längswand 6 in den Aufnahmebereich 9 hinein. Ein Ausweichen des elektronischen Geräts 2 in die Pfeilrichtung z' ist durch die Längswand 10 des Grundkörpers 3 verhindert, an welcher das elektronische Gerät 2 beim Niederdrücken in die Pfeilrichtung x anliegt. Der Träger 6 rastet in der Stellung B am Grundkörper 3 ein. Diese nicht näher dargestellte Verrastung kann durch eine Betätigung eines Drucktasters 11 aufgehoben werden, wobei der Träger 6 dann wieder in die Stellung A zurückschnappt und hierbei der Stecker 7a in die Pfeilrichtung z in die Längswand zurückgezogen wird. Anschließend kann das elektronische Gerät 2 dem Aufnahmebereich 9 entnommen werden. Die Schnittstelle 7 bzw. der Stecker 7a weist einen Mantelkontakt 25 auf. Dieser ist ohne Erhebungen und/oder Vertiefungen ausgebildet, um ein leichtes Aufschieben und Abziehen von der Schnittstelle 8 bzw. Buchse 8a des elektronischen Geräts 2 zu gewährleisten und eine formschlüssige Verbindung mit der Schnittstelle 8 des elektronischen Geräts 2 zu verhindern. Um die Leichtgängigkeit beim Zusammenschieben und Trennen der Schnittstellen weiter zu verbessern, ist es vorgesehen, Kanten 26 des Mantelkontakts 25 abzurunden.

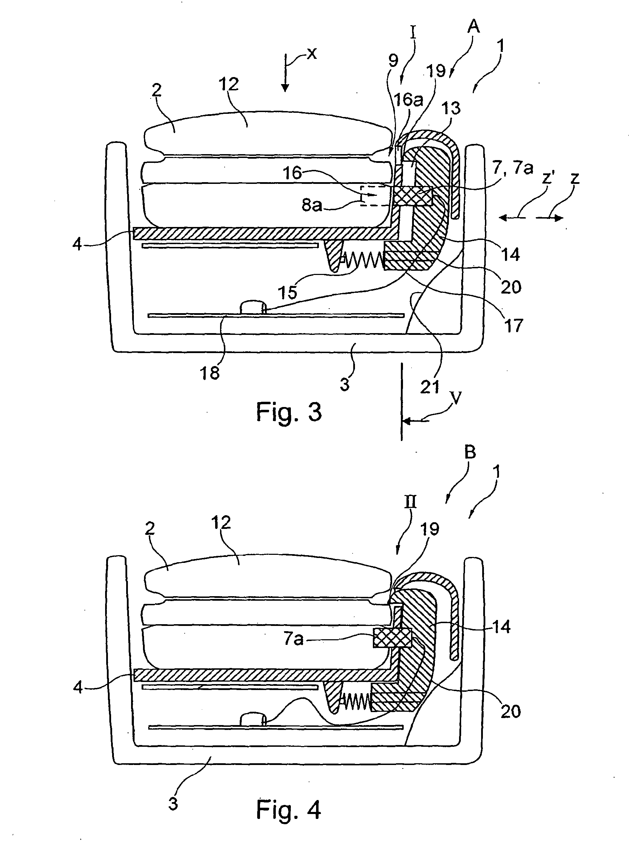

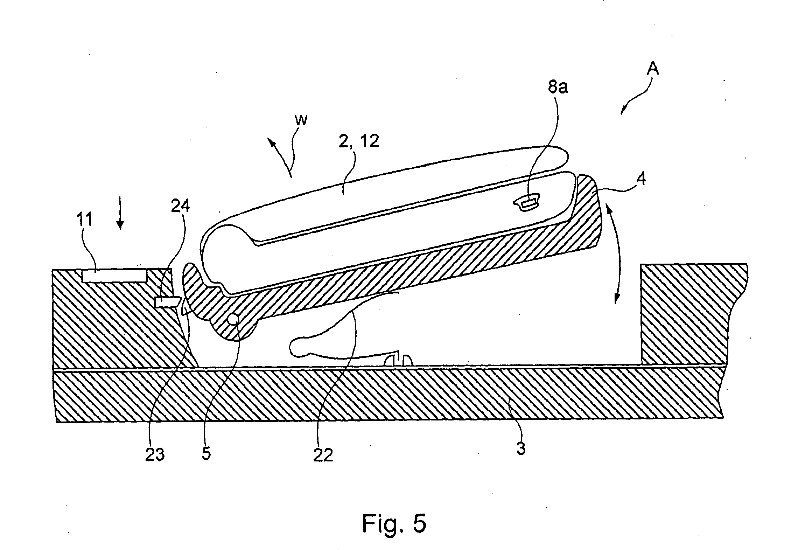

In der Figur 3 ist eine schematische Ansicht einer zweiten erfindungsgemäßen Haltevorrichtung 1 dargestellt, welche in einer Freigabestellung A steht. Die Haltevorrichtung 1 umfasst einen Grundkörper 3 und einen Träger 4. Der Träger 4 weist einen Aufnahmebereich 9 auf, in welchem ein elektronisches Gerät 2 liegt, das als Mobiltelefon 12 ausgebildet ist. Der Träger 4 weist einen Hohlraum 13 auf, in welchem ein Verriegelungselement 14 gegen eine Feder 15 verschiebbar gelagert ist. Das Verriegelungselement 14 trägt eine als Stecker 7a ausgebildete Schnittstelle 7, welche in einem Durchbruch 16 des Träger 4 verschiebbar gelagert ist. Der Durchbruch 16 verbindet den Aufnahmebereich 9 mit dem Hohlraum 13. Aus einer in der Figur 3 gezeigten ersten Stellung I ist der Stecker 7a gemeinsam mit dem Verriegelungselement 14 in eine Pfeilrichtung z' verschiebbar. Der Stecker 7a ist über ein Kabel 17 mit einer Leiterplatte 18 verbunden. Das Verriegelungselement 14 weist weiterhin eine Nase 19 auf, welche durch einen weiteren Durchbruch 16a in den Aufnahmebereich 9 tritt, wenn das Verriegelungselement 14 in die Pfeilrichtung z' geschoben wird. Die Betätigung des Verriegelungselements 14 erfolgt indirekt durch ein Niederdrücken des Mobiltelefons 12 und/oder des Trägers 4 in eine Pfeilrichtung x. Hierbei gleitet das Verriegelungselement 14 mit einer Gleitfläche 20 über eine an dem Grundkörper 3 angeordnete Schräge 21 und wird gegen die Feder 15 in die Pfeilrichtung z' gedrückt. Dies bewirkt ein Eintreten des Steckers 7a und der Nase 19 in den Aufnahmebereich 9 des Trägers 4 bzw. ein Einschieben des Steckers 7a in eine Buchse 8a des Mobiletelefons 12 und ein Niederhalten des Mobiltelefons 12 durch die Nase 19 (siehe Figur 4). Der Stecker 7a führt zusammen mit dem Verriegelungselement 14 also eine Relativbewegung zu dem sich bewegenden Träger 4 aus. Wenn der Träger 4 vollständig in die Pfeilrichtung x niedergedrückt ist, dann steht der Stecker 7a in der in der Figur 4 gezeigten Stellung II. Das Niederdrücken des Trägers 4 und/oder des Mobiltelefons 12 erfolgt gegen die Feder 15, welche das Verriegelungselement 14 abfedert, und gegen eine Feder 22, welche den Träger 4 gegenüber dem Grundkörper 3 abfedert (siehe Figur 5). In der in der Figur 4 gezeigten Haltestellung B ist der Träger 4 dann gegenüber dem Grundkörper 3 verriegelt. Die Verriegelung erfolgt mittels einer Rastnase 23 des Trägers 4, welche in der Haltestellung B über eine Zunge 24 des Grundkörpers 3 geschnappt ist (siehe Figur 5). Durch eine Betätigung eines Drucktasters 11 kann die Zunge 24 zurückgezogen und die Rastnase 23 freigegeben werden. Sobald diese Freigabe erfolgt bewirkt die Feder 22 eine Drehung des Trägers 4 um eine Drehachse 5 in eine Drehrichtung w in die in der Figur 3 gezeigte Einschiebe- bzw. Entnahmestellung A. Während dieser Drehbewegung des Trägers 4 um die Drehachse 5 drückt die Feder 15 das Verriegelungselement in eine Pfeilrichtung z. Hierdurch wird der Stecker 7a aus der Buchse 8a des Mobiltelefons 12 gezogen. Gleichzeitig mit dem Stecker 7a bewegt sich auch die Nase 19 in die Pfeilrichtung z und gibt das Mobiltelefon 12 zur Entnahme frei. In der wieder erreichten Einschiebe- bzw. Entnahmestellung A lässt sich das Mobiltelefon 12 dann ohne Gegenkraft aus der Haltevorrichtung 1 bzw. dem Aufnahmebereich 9 entnehmen, da der Stecker 7a bereits vollständig aus der Buchse 8a des Mobiltelefons 12 herausgezogen ist. Die Figur 5 zeigt einen vereinfachten Schnitt, welcher etwa in einer in der Figur 3 angedeuteten Schnittebene V verläuft.

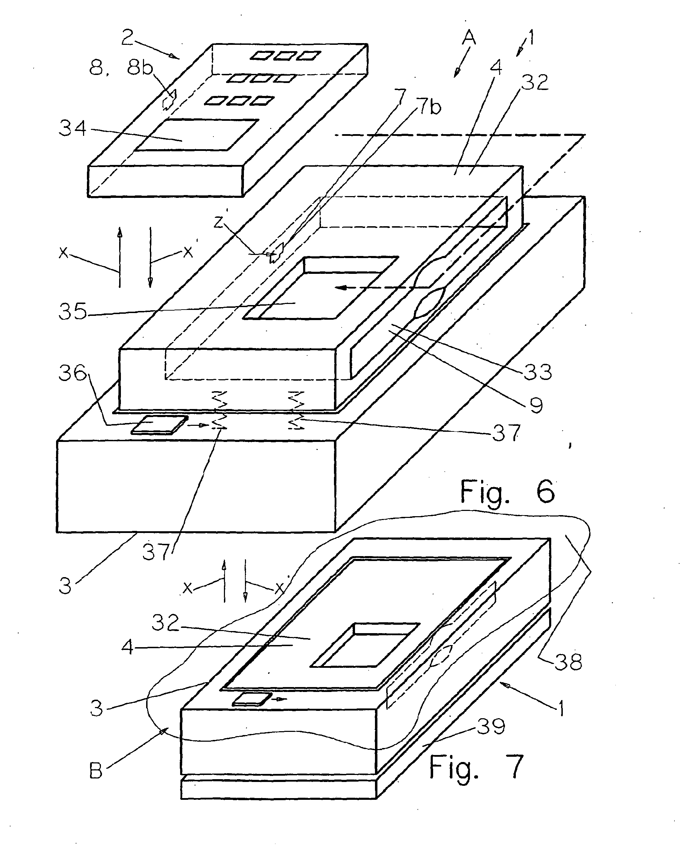

In der Figur 6 ist ein Träger 4 einer nicht vollständig dargestellten Haltevorrichtung 1 schematisch gezeigt. Dieser Träger 4 ist als Tasche 32 ausgebildet, in welche ein elektronisches Gerät 2 seitlich in ein einen Aufnahmebereich 9 bildendes Fach 33 einschiebbar ist. In dem Fach 33 ist eine Schnittstelle 7 angeordnet, welche auf eine Schnittstelle 8 des elektronischen Geräts 2 ausgerichtet ist. Das elektronische Gerät 2 weist ein Display 34 auf. Der Träger 4 ist wenigstens teilweise transparent ausgeführt und weist hierdurch ein Fester 35 auf, durch welches das Display 34 des elektronischen Geräts 2 ablesbar ist, wenn dieses in den als Tasche 32 ausgebildeten Träger 4 eingeschoben ist. Zur Kontaktierung des mobilen Geräts 2 wird der Träger 4 aus der dargestellten Freigabestellung A in eine Pfeilrichtung x in eine Haltestellung B (siehe Figur 7) niedergedrückt. Eine nicht dargestellte Mechanik, welche vergleichbar zu der in den Figuren 3 und 4 dargestellten Mechanik ausgebildet ist, bewegt beim Niederdrücken des Trägers 4 einen die Schnittstelle 7 bildenden Mini-USB-Secker 7b in eine Pfeilrichtung z' in eine die Schnittestelle 8 des elektronischen Geräts 2 bildende Mini-USB-Buchse 8b. Der Träger 4 verbleibt - gehalten durch einen Rastmechanismus - in der Haltestellung B, bis der Rastmechanismus über einen Schieber 36 entriegelt wird. Nach dem Entriegeln des Rastmechanismus wird der Träger 4 von wenigstens einem unter dem Träger 4 liegenden Federelement 37 in eine Pfeilrichtung x' in die Freigabestellung A gehoben. Bei dieser Bewegung wird der Mini-USB-Stecker 7b aus der Mini-USB-Buchse 8b gezogen und das elektronische Gerät kann in der Freigabestellung A wieder leicht aus dem Fach 33 entnommen werden.

In der Figur 7, in welcher der Träger 4 in der Haltestellung B steht, ist ergänzend dargestellt wie die Haltevorrichtung 1 in eine Konsole 38 beispielsweise eines Kraftfahrzeugs eingebettet ist. Die Haltevorrichtung 1 bzw. deren Grundkörper 3 ist auf einer Kontaktplatte 39 gehalten und elektrisch kontaktiert. Hierdurch lässt sich die Haltevorrichtung 1 unkompliziert in die Konsole 38 einbauen und aus der Konsole 38 ausbauen. In der Haltestellung B ist das Fach 33 des als Tasche 32 ausgebildeten Trägers 3 durch den Grundkörper 3 der Haltevorrichtung 1 verschlossen. Hierdurch ist das elektronische Gerät 2 sicher auf dem Stecker 7b gehalten. Selbst starke Vibrationen und Erschütterungen können nicht zu einem Lösen des elektronischen Geräts 2 von dem Stecker 7b führen, da dieses in dem durch den Grundkörper 3 geschlossenen Fach 33 formschlüssig gehalten ist und nicht ausweichen kann. In der Figur 7 wurde zur Erhaltung der Übersichtlichkeit auf die Darstellung eines elektronischen Geräts in dem Fach der Tasche 32 verzichtet.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung auch vor, eine Verschiebebewegung des Steckers durch lineare oder auf einer Kurvenbahn verlaufende Relativbewegungen des Trägers gegenüber dem Grundkörper zu erzeugen.

### Bezugszeichenliste:

- 1: Haltevorrichtung
- 2: elektronisches Gerät
- 3: Grundkörper von 1
- 4: Träger von 1
- 5: Schwenkachse zwischen 3 und 4
- 6: Längswand von 4
- 7: Schnittstelle an 4
- 7a: Stecker an 4
- 7b: Mini-USB-Stecker an 4
- 8: Schnittstelle an 2
- 8a: Buchse an 2
- 8b: Mini-USB-Buchse an 2
- 9: Aufnahmebereich von 4
- 10: Seitenwand von 3
- 11: Drucktaste am 3
- 12: Mobiltelefon
- 13: Hohlraum in 4
- 14: Verriegelungselement
- 15: Feder zwischen 14 und 4
- 16, 16a: Durchbruch in 4 für 7 bzw. für 19
- 17: Kabel
- 18: Leiterplatte
- 19: Nase von 14
- 20: Gleitfläche von 14
- 21: Schräge
- 22: Feder
- 23: Rastnase von 4
- 24: Zarge von 3
- 25: Mantelkontakt von 7 bzw. 7a
- 26: Kante von 25
- 30, 31: Querwand
- 32: Tasche
- 33: Fach
- 34: Display von 2
- 35: Fenster
- 36: Schieber
- 37: Federelement
- 38: Konsole
- 39: Kontaktplatte

- α: Schwenkwinkel
- L91, L92: Längsseite von 9
- Q91, Q92: Querseite von 9
- 1: Länge von L91 bzw. L92
- q: Länge von Q91 bzw. Q92
- w: Pfeilrichtung
- x: Pfeilrichtung
- z, z': Pfeilrichtung
- R: Rechteck
- A: Freigabestellung von 4 bzw. 1
- B: Haltestellung von 4 bzw. 1

## Patentansprüche

1. Haltevorrichtung (1) für ein elektronisches Gerät (2, 12), wobei die Haltevorrichtung (1) einen feststehenden Grundkörper (3) und einen Träger (4) umfasst, wobei der Träger (4) relativ zu dem Grundkörper (3)bewegbar ist, wobei der Träger (4) einen Aufnahmebereich (9) für das elektronische Gerät (2, 12) aufweist, wobei der Träger (4) aus einer Haltestellung (B) für das elektronische Gerät (2, 12) in eine Freigabestellung (A) für das elektronische Geräte (2, 12) bewegbar ist und umgekehrt, wobei der Träger (4) wenigstens eine Schnittstelle (7) umfasst, welche zu einer Schnittstelle (8) des elektronischen Geräts (2, 12) kompatibel ist, **dadurch gekennzeichnet, dass** die Schnittstelle (7) in der Freigabestellung (A) des Trägers (4) in einer aus dem Aufnahmebereich (9) zurückgezogenen ersten Stellung (I) steht, dass die Schnittstelle (7) in der Haltestellung (B) des Trägers (4) in einer in den Aufnahmebereich (9) ausgefahrenen zweiten Stellung (II) steht, dass die Schnittstelle (7) bei einer Bewegung des Trägers (4) aus der Haltestellung (B) in die Freigabestellung (A) aus ihrer zweiten Stellung (II) in ihre erste Stellungen (I) verfahrbar ist und dass die Schnittstelle (7) bei einer Bewegung des Trägers (4) aus der Freigabestellung (A) in die Haltestellung (B) aus ihrer ersten Stellung (I) in ihre zweite Stellungen (II) verfahrbar ist.

2. Haltevorrichtung nach Anspruch 1, **dadurch gekennzeichnet, dass** die Schnittstelle (7) des Trägers (4) insbesondere als Stecker (7a) ausgebildet ist oder dass die Schnittstelle (8) des elektronischen Geräts (2, 12) insbesondere als Buchse (8a) ausgebildet ist.

3. Haltevorrichtung nach einem der vorhergehenden Ansprüche 1 oder 2, **dadurch gekennzeichnet, dass** der Träger (4) an dem Grundkörper (3) um eine Schwenkachse (5) schwenkbar angeordnet ist.

4. Haltevorrichtung nach Anspruch 1, **dadurch gekennzeichnet, dass** der Aufnahmebereich (9) des Trägers (4) in Draufsicht rechteckig ausgebildet ist und Längsseiten (L91, L92) und Querseiten (Q91, Q92) aufweist.

5. Haltevorrichtung nach einem der vorhergehenden Ansprüche 1 oder 2, **dadurch gekennzeichnet, dass** die Schnittstelle (7) an einer der Längsseiten (L91, L92) des Aufnahmebereichs (9) des Trägers (4) angeordnet ist

6. Haltevorrichtung nach einem der vorhergehenden Ansprüche 1, 4 oder 5, **dadurch gekennzeichnet, dass** der Aufnahmebereich (9) für das elektronische Gerät (2, 12) auch von der Längsseite (L92) her zugänglich ist, welche der Schnittstelle (7) gegenüberliegt.

7. Haltevorrichtung nach einem der vorhergehenden Ansprüche 1, 2 oder 6, **dadurch gekennzeichnet, dass** die Schnittstelle (7) einen erhebungs- und vertiefungsfreien Mantelkontakt (25) aufweist.

8. Haltevorrichtung nach einem der vorhergehenden Ansprüche 1, 2, 6 oder 7, **dadurch gekennzeichnet, dass** die Schnittstelle (7) abgerundete Kanten (26) aufweist.

9. Haltevorrichtung nach einem der vorhergehenden Ansprüche, **dadurch gekennzeichnet, dass** die Schnittstellen (7, 8) insbesondere als sogenannte Mini-USB-Verbindung mit einem Mini-USB-Stecker (7b) und einer Mini-USB-Buchse (8b) ausgebildet ist oder dass die Schnittstelle (7) insbesondere als sogenannte Fire-Wire-Verbindung ausgebildet ist.

10. Haltevorrichtung nach einem der vorhergehenden Ansprüche, **dadurch gekennzeichnet, dass** der Träger (4) insbesondere den Aufnahmebereich (9) im Bereich der Schnittstelle (7) übergreift und eine Tasche (32) für das elektronische Gerät (2, 12) bildet und dass der Träger (4) insbesondere drei Seitenwände (6, 30, 31) aufweist und dass der Träger (4) insbesondere ein Fach (33) aufweist, in welches das elektronische Gerät (2, 12) einschiebbar ist und dass die Tasche 32 insbesondere für eine Anzeigevorrichtung (34) des elektronischen Geräts (2, 12) einen Durchbruch oder ein Fenster (35) aufweist und dass der Träger (4) insbesondere aus einem transparenten Material ausgebildet ist.

11. Haltevorrichtung nach einem der vorhergehenden Ansprüche, **dadurch gekennzeichnet, dass** das elektronische Gerät (2) ein Mobiltelefon (12) ist, wobei das Mobiltelefon (12) insbesondere als Klapptelefon oder insbesondere als Schiebetelefon ausgebildet ist.

12. Haltevorrichtung nach einem der vorhergehenden Ansprüche, **dadurch gekennzeichnet, dass** die Haltervorrichtung (1) insbesondere in eine Konsole (38) eingebettet ist und dass die Haltervorrichtung (1) insbesondere mit einer Kontaktplatte (39) kontaktierbar und/oder verrastbar ist.

13. Haltevorrichtung nach einem der vorhergehenden Ansprüche, **dadurch gekennzeichnet, dass** an dem Grundkörper (3) der Haltervorrichtung (1) wenigstens ein Bedienelement (36) angeordnet ist.

14. Haltevorrichtung nach einem der vorhergehenden Ansprüche, **dadurch gekennzeichnet, dass** der Träger (4) zum Erreichen der Haltestellung (B) in den Grundkörper (3) eindrückbar ist und dass der Aufnahmebereich (9) des Trägers (4) nach dem Erreichen der Haltestellung (B) von dem Grundkörper (3) wannenartig umschlossen ist.

15. Haltevorrichtung nach einem der vorhergehenden Ansprüche, **dadurch gekennzeichnet, dass** der Träger (4) zum Erreichen der Freigabestellung (A) aus dem Grundkörper (3) herausfahrbar ist.

## Claims

1. Holding apparatus (1) for an electronic appliance (2, 12), wherein the holding apparatus (1) comprises a fixed basic body (3) and a support (4), wherein the support (4) is able to move relative to the basic body (3), the support (4) has a receiving area (9) for the electronic appliance (2, 12) and the support (4) is able to move out of a holding position (B) of the electronic appliance (2, 12) into a release position (A) of the electronic appliance (2, 12) and vice versa, wherein the support (4) comprises at least one interface (7) which is compatible with an interface (8) of the electronic appliance (2, 12), **characterised in that** when the support (4) is in the release position (A) the interface (7) is in a first position (I) withdrawn from the receiving area (9), **in that** when the support (4) is in the holding position (B) the interface (7) is in a second position (II) extended into the receiving area (9), **in that** when the support (4) moves from the holding position (B) into the release position (A) the interface (7) can be moved from its second position (II) into its first position (I) and **in that** when the support (4) moves from the release position (A) into the holding position (B) the interface (7) can be moved from its first position (I) into its second position (II).

2. Holding apparatus according to claim 1, **characterised in that** the interface (7) of the support (4) is designed in particular as a plug (7a) or **in that** the interface (8) of the electronic device (2, 12) is designed in particular as a socket (8a).

3. Holding apparatus according to one of the preceding claims 1 or 2, **characterised in that** the support (4) is arranged pivotably on the basic body (3) about a pivot axis (5).

4. Holding apparatus according to claim 1, **characterised in that** the receiving area (9) of the support (4) is designed to be rectangular in plan view and has longitudinal sides (L91, L92) and transverse sides (Q91, Q92).

5. Holding apparatus according to one of the preceding claims 1 or 2, **characterised in that** the interface (7) is arranged on one of the longitudinal sides (L91, L92) of the receiving area (9) of the support (4).

6. Holding apparatus according to one of the preceding claims 1, 4 or 5, **characterised in that** the receiving area (9) for the electronic device (2, 12) is also accessible from the longitudinal side (L92), which is opposite the interface (7).

7. Holding apparatus according to one of the preceding claims 1, 2 or 6, **characterised in that** the interface (7) has an elevation-free and depression-free casing contact (25).

8. Holding apparatus according to one of the preceding claims 1, 2, 6, or 7, **characterised in that** the interface (7) has rounded edges (26).

9. Holding apparatus according to one of the preceding claims, **characterised in that** the interfaces (7, 8) in particular consist of a so-called mini-USB connection with a mini-USB-plug (7b) and a mini-USB-socket (8b), or **in that** the interface (7) is designed in particular as a so-called firewire connection.

10. Holding apparatus according to one of the preceding claims, **characterised in that** the support (4) overgrips in particular the receiving area (9) in the region of the interface (7) and forms a pocket (32) for the electronic device (2, 12), and **in that** the support (4) comprises in particular three side walls (6, 30, 31) and **in that** the support (4) comprises in particular a compartment (33) into which the electronic device (2, 12) can be inserted, and **in that** the pocket (32) has an opening or a window (35) in particular for a display device (34) of the electronic device (2, 12), and **in that** the support (4) is made in particular from a transparent material.

11. Holding apparatus according to one of the preceding claims, **characterised in that** the electronic device (2) is a mobile phone (12), wherein the mobile phone (12) is designed in particular as a folding phone or as a sliding phone.

12. Holding apparatus according to one of the preceding claims, **characterised in that** the holding device (1) is embedded in particular into a console (38), and **in that** the holding apparatus (1) can be contacted and/or locked in particular by a contact plate (39).

13. Holding apparatus according to one of the preceding claims, **characterised in that** at least one operating element (36) is arranged on the basic body (3) of the holding apparatus (1).

14. Holding apparatus according to one of the preceding claims, **characterised in that** the support (4) can be pushed into the basic body (3) to reach the holding position (B), and **in that** the receiving area (9) of the support (4) is surrounded tray-like by the basic body (3) after reaching the holding position (B).

15. Holding apparatus according to one of the preceding claims, **characterised in that** the support (4) can be retracted to reach the release position (A) from the basic body (3).

## Revendications

1. Dispositif de fixation (1) d'un appareil électronique (2, 12) selon lequel,
- le dispositif de fixation (1) comporte un corps de base (3), fixe et un support (4),
- le support (4) est mobile par rapport au corps de base (3),
- le support (4) comporte une zone de réception (9) pour l'appareil électronique (2, 12),
- le support (4) peut être déplacé d'une position de fixation (B) de l'appareil électronique (2, 12) dans une position de libération (A) de l'appareil électronique (2, 12) et inversement,
- le support (4) comporte au moins une interface (7) compatible avec une interface (8) de l'appareil électronique (2, 12),
**caractérisé en ce que**
- dans la position de libération (A) du support (4), l'interface (7) est dans une première position (I) en retrait par rapport à la zone de réception (9),
- dans la position de fixation (B) du support (4), l'interface (7) est dans une seconde position (II) sortie dans la zone de réception (9),
- un mouvement du support (4), déplace l'interface (7) de sa position de fixation (B) dans sa position de libération (A), à partir de sa seconde position (II) vers sa première position (I), et
- un mouvement du support (4) de la position de libération (A) à la position de fixation (B), déplace l'interface (7) de sa première position (I) vers sa seconde position (II).

2. Dispositif de fixation selon la revendication 1,
**caractérisé en ce que**
l'interface (7) du support (4) est notamment réalisée sous la forme d'un connecteur (7a), ou
l'interface (8) de l'appareil électronique (2, 12) est réalisée notamment sous la forme d'une douille (8a).

3. Dispositif de fixation selon l'une des revendications précédentes 1 ou 2,
**caractérisé en ce que**
le support (4) est monté pivotant sur le corps de base (3) autour d'un axe de pivotement (5).

4. Dispositif de fixation selon la revendication 1,
**caractérisé en ce que**
la zone de réception (9) du support (4) a une forme rectangulaire en vue de dessus et comporte des grands côtés (L91, L92) et des petits côtés (Q91, Q92).

5. Dispositif de fixation selon l'une des revendications précédentes 1 ou 2,
**caractérisé en ce que**
l'interface (7) est prévue sur l'un des grands côtés (L91, L92) de la zone de réception (9) du support (4).

6. Dispositif de fixation selon l'une des revendications précédentes 1, 4 ou 5,
**caractérisé en ce que**
la zone de réception (9) de l'appareil électronique (2, 12) est également accessible à partir du grand côté (L92) à l'opposé de celui de l'interface (7).

7. Dispositif de fixation selon l'une des revendications précédentes 1, 2 ou 6,
**caractérisé en ce que**
l'interface (7) comporte un contact enveloppe (25) sans bossages ni cavités.

8. Dispositif de fixation selon l'une des revendications précédentes 1, 2, 6 ou 7,
**caractérisé en ce que**
l'interface (7) a des arêtes arrondies (26).

9. Dispositif de fixation selon l'une des revendications précédentes, **caractérisé en ce que**
- les interfaces (7, 8) sont réalisées notamment sous la forme d'une connexion mini-USB avec un mini connecteur USB (7b) ou une mini prise USB (8b), et
- l'interface (7) est réalisée notamment comme liaison FireWire.

10. Dispositif de fixation selon l'une des revendications précédentes, **caractérisé en ce que**
- le support (4) chevauche notamment la zone de réception (9) au niveau de l'interface (7) et forme une poche (32) pour l'appareil électronique (2, 12), et
- le support (4) comporte notamment trois parois latérales (6, 30, 31), et
- le support (4) comporte notamment un compartiment (33) dans lequel se glisse l'appareil électronique (2, 12), et
- la poche (32) comporte notamment un passage ou une fenêtre (35) pour le dispositif d'affichage (34) de l'appareil électronique (2, 12), et
- le support (4) est notamment réalisé en un matériau transparent.

11. Dispositif de fixation selon l'une des revendications précédentes, **caractérisé en ce que**
- l'appareil électronique (2) est un téléphone mobile (12),
- le téléphone mobile (12) est notamment un téléphone à volet ou notamment un téléphone à tiroir.

12. Dispositif de fixation selon l'une des revendications précédentes, **caractérisé en ce que**
- le dispositif de fixation (1) est notamment intégré dans une console (38), et
- le dispositif de fixation (1) peut être branché et/ou accroché, notamment à une patte de contact (39).

13. Dispositif de fixation selon l'une des revendications précédentes, **caractérisé en ce que**
le corps de base (3) du dispositif de fixation (1), comporte au moins un élément de manoeuvre (36).

14. Dispositif de fixation selon l'une des revendications précédentes, **caractérisé en ce que**
- pour atteindre la position de fixation (B), le support (4) peut s'enfoncer dans le corps de base (3), et
- la zone de réception (9) du support (4) est entourée à la manière d'une cuvette par le corps de base (3) lorsqu'on atteint la position de fixation (B).

15. Dispositif de fixation selon l'une des revendications précédentes, **caractérisé en ce que**
pour arriver dans la position de libération (A), le support (4) se dégage du corps de base (3).
